# EUROPEAN PATENT APPLICATION

(11) **EP 4 485 633 A1**
(43) Date of publication of application: **01.01.2025**
(21) Application number: 23756252.5
(22) Date of filing: 07.02.2023
(51) Int. Cl.: H01M 50/105, H01M 10/052, H01M 10/0562, H01M 50/117, H01M 50/129

(54) **ALL-SOLID-STATE BATTERY OUTER PACKAGING MATERIAL, AND ALL-SOLID-STATE BATTERY USING SAME**

(30) Priority: 21.02.2022 JP 2022024754
(71) Applicant: Toppan Holdings Inc., Tokyo 110-0016 (JP)
(72) Inventor: MURATA, Koji, Tokyo 110-0016 (JP)
(74) Representative: Hoffmann Eitle
(86) International application number: PCT/JP2023/004062
(87) International publication number: WO 2023/157726

(57) **Abstract**

A solid-state battery packaging material at least includes: a substrate layer; a barrier layer; and a sealant layer laminated in this order, wherein at least one of the layers constituting the packaging material contains a composite oxide containing a divalent metal and a trivalent metal.

## Description

### [Technical Field]

The present disclosure relates to solid-state battery packaging materials and solid-state batteries using the same.

### [Background Art]

Secondary batteries, such as lithium-ion batteries, are widely used in portable electronic devices, electric vehicles and hybrid electric vehicles powered by electricity, and the like. As lithium-ion batteries with improved safety, solid-state lithium batteries using an inorganic solid electrolyte instead of an organic solvent electrolyte are being studied. Solid-state lithium batteries are excellent in safety compared with lithium-ion batteries in that thermal runaway due to short circuit or the like is unlikely to occur.

In solid-state batteries, particularly in solid-state batteries using a sulfide-based solid electrolyte, the sulfide-based solid electrolyte may react with moisture and generate hydrogen sulfide if moisture enters the battery. Since hydrogen sulfide is toxic, it is necessary to suppress generation of hydrogen sulfide, and quickly detoxify (deodorize) hydrogen sulfide if it is generated. In order to suppress generation of hydrogen sulfide, adding materials (e.g., zeolite, silica gel and lime) that adsorb (absorb) moisture to each layer of the packaging material is being considered. Further, methods for detoxifying hydrogen sulfide using a hydrogen sulfide adsorbing substance in the packaging material in case hydrogen sulfide is generated are being considered. For example, PTL 1 discloses a packaging material that uses a metal oxide, such as zinc oxide, as a hydrogen sulfide adsorbing substance.

### [Citation List]

### [Patent Literature]

PTL 1: JP 2021-136091 A

### [Summary of Invention]

### [Technical Problem]

Common moisture adsorbing substances such as zeolites form a hydrated structure when adsorbing moisture, but may re-release moisture when heated to about 100°C, which is not desirable for improving moisture barrier properties, considering that solid-state batteries may reach about 100°C to 130°C during use. Further, packaging materials that use moisture adsorbing substances such as zeolites also have room for improvement in hydrogen sulfide absorption properties.

When a metal oxide such as zinc oxide reacts with hydrogen sulfide, the following reaction may occur, resulting in generation of moisture. Further, packaging materials that use a metal oxide such as zinc oxide have room for improvement in moisture barrier properties.

ZnO+H₂S → ZnS+H₂O

Therefore, the present disclosure has been made to provide a solid-state battery packaging material that is excellent in moisture barrier properties and hydrogen sulfide absorption properties, and a solid-state battery using the same.

### [Solution to Problems]

In order to solve the above problems, the present disclosure provides a solid-state battery packaging material at least including: a substrate layer; a barrier layer; and a sealant layer laminated in this order, wherein at least one of the layers constituting the packaging material contains a composite oxide containing a divalent metal and a trivalent metal.

According to the above packaging material, the composite oxide can adsorb moisture and hydrogen sulfide. Therefore, due to the layer containing the above composite oxide, excellent moisture barrier properties and hydrogen sulfide absorption properties are achieved. Therefore, since the solid-state battery inhibits moisture from passing through the packaging material and reaching the solid electrolyte when the packaging material is used for the solid-state battery, it is possible to prevent hydrogen sulfide from being generated in the solid-state battery due to reaction between moisture and hydrogen sulfide-based solid electrolyte. Further, even if hydrogen sulfide is generated in the solid-state battery when the packaging material is used for the solid-state battery, the packaging material having excellent hydrogen sulfide absorption properties can absorb the hydrogen sulfide and detoxify the hydrogen sulfide.

In addition, after adsorbing moisture, the composite oxide is less likely to release moisture even if it is placed in a high-temperature environment of around 100°C where the solid-state battery is used. Therefore, even if the solid-state battery having the packaging material is placed in a high-temperature environment of around 100°C after the composite oxide adsorbs moisture, it is possible to prevent hydrogen sulfide from being re-generated due to reaction between moisture and hydrogen sulfide-based solid electrolyte in the solid-state battery. In addition, even if moisture is generated by chemical reaction when the composite oxide adsorbs hydrogen sulfide, the composite oxide adsorbs the generated moisture, and thus prevents hydrogen sulfide from being re-generated due to a reaction between moisture and the hydrogen sulfide-based solid electrolyte in the solid-state battery.

In the above solid-state battery packaging material, the composite oxide is preferably a compound represented by the following general formula (1).

(M¹_{y}M²_{1-y})₁₋ₓM³ₓO_{1+x/2} (1)

[in formula (1), M¹ represents a divalent metal selected from the group consisting of Zn, Mg, Ca, Ni, Co, Fe, Ba, Mn and Cu, M² represents at least one divalent metal selected from the group consisting of Zn, Mg, Ca, Ni, Co, Fe, Ba, Mn and Cu, and is a metal different from M¹, M³ represents at least one trivalent metal selected from the group consisting of Al, Cr, Ga and Fe, x satisfies 0.2 < x ≤ 0.4, and y satisfies 0.25 ≤ y ≤ 1.]

According to this packaging material, further improved moisture barrier properties and hydrogen sulfide absorption properties are achieved.

In the above general formula (1), M¹ is preferably Zn. According to this packaging material, further improved hydrogen sulfide absorption properties are achieved. Further, in the above general formula (1), y=1 is more preferred when M¹ is Zn. According to this packaging material, further improved hydrogen sulfide absorption properties are achieved.

In the above solid-state battery packaging material, the trivalent metal may be Al. When the trivalent metal is Al, the above composite oxide can be stably prepared.

In the above solid-state battery packaging material, the composite oxide preferably has an average major axis of 0.01 µm or greater. When the average major axis of the composite oxide is 0.01 µm or greater, the above composite oxide tends to be uniformly dispersed.

In the above solid-state battery packaging material, when the sealant layer contains the above composite oxide, the composite oxide preferably has an average major axis of 20 µm or less. When the composite oxide is contained in the sealant layer and the average major axis of the composite oxide is 20 µm or less, the sealant layer is likely to form a flat surface, making heat sealing easier.

In the above solid-state battery packaging material, a content of the composite oxide in the layer containing the composite oxide is preferably 1 mass% to 40 mass% relative to a total amount of the layer. When the content of the composite oxide in the layer containing the composite oxide is 1 mass% or greater relative to the total amount of the layer, the packaging material has further improved moisture barrier properties and hydrogen sulfide absorption properties. When the content of the composite oxide in the layer containing the composite oxide is 40 mass% or less relative to the total amount of the layer, deterioration of functions (for example, strength of the layer itself, adhesion strength, sealing strength, etc.) of the layer containing the composite oxide can be sufficiently suppressed.

The above solid-state battery packaging material may further include an adhesive layer between the barrier layer and the sealant layer, wherein the adhesive layer and/or the sealant layer may be formed of a plurality of layers, and at least one of the plurality of layers may contain the composite oxide.

The above solid-state battery packaging material may include an anticorrosion treatment layer on one or both surfaces of the barrier layer. According to this anticorrosion treatment layer, the reliability of the packaging material can be maintained for a longer period of time.

The present disclosure further provides a solid-state battery including a battery element; and the solid-state battery packaging material of the present disclosure that accommodates the battery element.

### [Advantageous Effects of Invention]

According to the present disclosure, a solid-state battery packaging material that is excellent in moisture barrier properties and hydrogen sulfide absorption properties, and a solid-state battery using the same can be provided.

### [Brief Description of Drawings]

Fig. 1 is a schematic cross-sectional view of a solid-state battery packaging material according to an embodiment of the present disclosure.
Fig. 2 is a schematic cross-sectional view of a solid-state battery packaging material according to an embodiment of the present disclosure.
Fig. 3 is a schematic cross-sectional view of a solid-state battery packaging material according to an embodiment of the present disclosure.
Fig. 4 is a perspective view of a solid-state battery according to an embodiment of the present disclosure.
Fig. 5 is a schematic diagram illustrating a method of preparing a sample for measuring heat sealing strength in examples and comparative examples.

### [Description of Embodiments]

With reference to the drawings, a preferred embodiment of the present disclosure will be specifically described. Throughout the drawings, the same or corresponding components are denoted by the same reference signs, and repeated description is omitted. Further, the dimensional ratios of the drawings are not limited to those shown in the drawings.

### [Solid-State Battery Packaging Material]

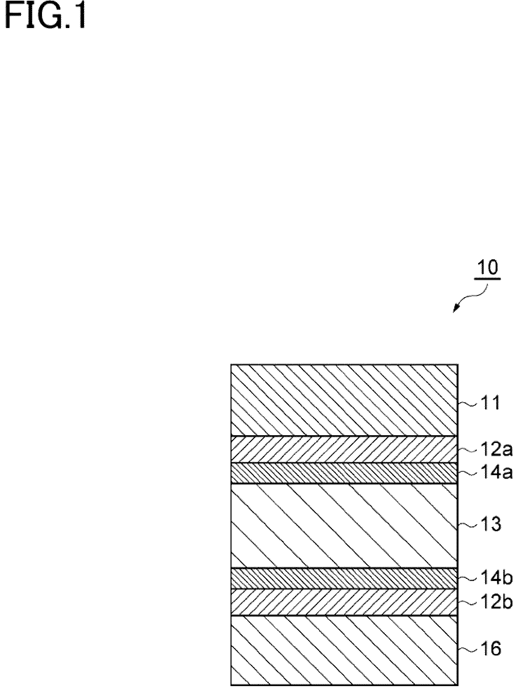

Fig. 1 is a cross-sectional view schematically illustrating an embodiment of a solid-state battery packaging material of the present disclosure. As shown in Fig. 1, a packaging material (solid-state battery packaging material) 10 of the present embodiment is a laminate including, in the following order, a substrate layer 11, a first adhesive layer 12a formed on a surface of the substrate layer 11, a barrier layer 13 formed on the first adhesive layer 12a on a side opposite to that facing the substrate layer 11, the barrier layer 13 provided with first and second anticorrosion treatment layers 14a and 14b on respective sides, a second adhesive layer 12b formed on the barrier layer 13 on a side opposite to that facing the first adhesive layer 12a, and a sealant layer 16 formed on the second adhesive layer 12b on a side opposite to that facing the barrier layer 13. The first anticorrosion treatment layer 14a is provided on a surface of the barrier layer 13 facing the substrate layer 11, and the second anticorrosion treatment layer 14b is provided on a surface of the barrier layer 13 facing the sealant layer 16. In the packaging material 10, the substrate layer 11 is the outermost layer and the sealant layer 16 is the innermost layer. In other words, the packaging material 10 is used with the substrate layer 11 being on the outside of the solid-state battery and the sealant layer 16 being on the inside of the solid-state battery. In the following description, each of layers constituting the packaging material 10 will be specifically described.

### <Substrate Layer 11>

The substrate layer 11 imparts heat resistance to the packaging material in the sealing step during production of the solid-state battery, and prevents pinholes from occurring during forming processing or distribution. Particularly in the case of packaging materials for solid-state batteries for large applications, the substrate layer 11 can also impart scratch resistance, chemical resistance, insulating properties, and the like.

The substrate layer 11 is preferably a layer formed of an insulating resin. Examples of the resin include polyester resins, polyamide resins, polyimide resins, polyamideimide resins, polyether ketone resins, polyphenylene sulfide resins, polyetherimide resins, polysulfone resins, fluororesins, phenol resins, melamine resins, urethane resins, allyl resins, silicon resins, epoxy resins, furan resins and acetyl cellulose resins.

Among these resins, polyester resins and polyamide resins are preferred for the substrate layer 11 from the perspective of having excellent formability. Examples of the polyester resins include polyethylene terephthalate, polybutylene terephthalate and polyethylene naphthalate. Examples of the polyamide resins include nylon-6, nylon-6,6, copolymers of nylon-6 and nylon-6,6, nylon-6, nylon-9T, nylon-10, polymetaxylylene adipamide (MXD6), nylon-11 and nylon-12.

The substrate layer 11 may be in the form of a stretched or unstretched film, or in the form of a coating film. Further, the substrate layer 11 may be formed of a single layer or multiple layers. When the substrate layer 11 includes multiple layers, different resins can be used in combination. For the substrate layer 11 in the form of a film, the substrate layer 11 obtained by coextruding a plurality of layers or by laminating a plurality of layers via an adhesive can be used. For the substrate layer 11 in the form of a coating film, the substrate layer 11 obtained by coating a coating liquid the number of times of lamination can be used, or the substrate layer 11 obtained by forming a multilayer structure by combining a film and a coating liquid can be used.

When these resins are used in the form of a film, the substrate layer 11 is preferably a biaxially stretched film. The stretching method used when the substrate layer 11 is a biaxially stretched film may be, for example, sequential biaxial stretching, tubular biaxial stretching, simultaneous biaxial stretching, or the like. From the perspective of obtaining better deep drawing formability, the biaxially stretched film is preferably stretched using a tubular biaxial stretching method.

The substrate layer 11 preferably has a thickness of 6 µm to 40 µm, and more preferably 10 µm to 30 µm. The substrate layer 11 having a thickness of 6 µm or greater tends to improve pinhole resistance and insulation properties of the packaging material 10. The substrate layer 11 having a thickness of 40 µm or less can reduce the total thickness of the packaging material 10.

In order to suppress deformation of the substrate layer 11 during sealing, the melting point of the substrate layer 11 is higher than the melting point of the sealant layer 16, and preferably higher than the melting point of the sealant layer 16 by 30°C or more.

### <First Adhesive Layer 12a>

The first adhesive layer 12a bonds the substrate layer 11 and the barrier layer 13. Specifically, examples of the materials used for forming the first adhesive layer 12a include a polyurethane resin prepared by reacting a main resin such as a polyester polyol, polyether polyol, acrylic polyol or carbonate polyol with a bifunctional or higher functional isocyanate compound (polyfunctional isocyanate compound). These various polyols can be used singly or in combination of two or more, according to the functions and performance sought in the packaging material 10. Further, in addition to the above, the first adhesive layer 12a can also be made of an epoxy resin as a main resin with a curing agent. The materials for forming the first adhesive layer 12a are not limited to these described above. Further, the materials for forming the first adhesive layer 12a may further contain various additives such as stabilizers depending on the performance required for the first adhesive layer 12a.

The thickness of the first adhesive layer 12a is not specifically limited, but may be, for example, preferably 1 µm to 10 µm, and more preferably 2 µm to 7 µm, from the perspective of obtaining desired adhesive strength, conformability, processability, and the like.

### <Barrier Layer 13>

The barrier layer 13 has water vapor barrier properties to prevent moisture from infiltrating into the solid-state battery. Further, the barrier layer 13 may have ductility and malleability for deep drawing. The barrier layer 13 can be made of, for example, various metal foils such as an aluminum, stainless steel and copper, or a metal vapor deposition film, an inorganic oxide vapor deposition film, a carbon-containing inorganic oxide vapor deposition film, or a film having these vapor deposition films. Examples of the film having a vapor deposition film include an aluminum vapor deposition film and an inorganic oxide vapor deposition film. These can be used singly or in combination of two or more. The barrier layer 13 is preferably made of a metal foil, and more preferably made of an aluminum foil, from the viewpoint of the weight (specific gravity), moisture resistance, processability and cost.

The aluminum foil may be a soft aluminum foil, particularly one subjected to an annealing treatment from the perspective of imparting desired ductility and malleability during forming, and is more preferably an iron-containing aluminum foil for the purpose of further imparting pinhole resistance, ductility and malleability during forming. The iron content in the aluminum foil is preferably 0.1 mass% to 9.0 mass%, and more preferably 0.5 mass% to 2.0 mass% relative to 100 mass% of the aluminum foil. The iron content of 0.1 mass% or greater can improve pinhole resistance, ductility and malleability of a packaging material 10. The iron content of 9.0 mass% or less can improve flexibility of a packaging material 10. Although an untreated aluminum foil may also be used as the aluminum foil, an aluminum foil subjected to a degreasing treatment is preferably used from the perspective of imparting corrosion resistance. When the aluminum foil is degreased, only one surface of the aluminum foil may be degreased, or both surfaces may be degreased.

The thickness of the barrier layer 13 is not specifically limited, but is preferably 9 µm to 200 µm, and more preferably 15 µm to 100 µm, from the perspective of barrier properties, pinhole resistance and processability.

### <First and Second Anticorrosion Treatment Layers 14a and 14b>

The first and second anticorrosion treatment layers 14a and 14b are provided to prevent corrosion of the metal foil (metal foil layer) or the like constituting the barrier layer 13. Further, the first anticorrosion treatment layer 14a prevents the barrier layer 13 from being corroded by corrosive gases contained in the atmosphere, and enhances the adhesive strength between the barrier layer 13 and the first adhesive layer 12a. The second anticorrosion treatment layer 14b prevents the barrier layer 13 from being corroded by gases generated inside the battery, and enhances the adhesive strength between the barrier layer 13 and the second adhesive layer 12b. The first and second anticorrosion treatment layers 14a and 14b can maintain the reliability of the packaging material 10 for a longer period of time. The first and second anticorrosion treatment layers 14a and 14b may have the same configuration or different configurations. The first and second anticorrosion treatment layers 14a and 14b (hereinafter, also simply referred to as "anticorrosion treatment layers 14a and 14b") may be formed by, for example, subjecting the metal foil constituting the barrier layer 13 to degreasing treatment, hydrothermal modification treatment, anodic oxidation treatment, chemical conversion treatment, or a combination of these treatments.

The degreasing treatment may be acid degreasing or alkaline degreasing. Examples of the acid degreasing include the use of inorganic acids, such as sulfuric acid, nitric acid, hydrochloric acid and hydrofluoric acid, alone or in a mixture. Further, the acid degreasing is preferably performed using an acid degreasing agent obtained by dissolving a fluorine-containing compound, such as monosodium ammonium bifluoride, in the above inorganic acid. In particular, when an aluminum foil is used as the barrier layer 13, this treatment contributes to forming a fluoride of aluminum in a passive state, in addition to obtaining the effect of degreasing aluminum. Therefore, this treatment is effective in terms of corrosion resistance. Examples of the alkaline degreasing include the use of sodium hydroxide or the like.

Examples of the hydrothermal modification treatment include a boehmite treatment in which an aluminum foil is immersed in boiling water to which triethanolamine has been added. Examples of the anodic oxidation treatment include an alumite treatment.

The chemical conversion treatment may be an immersion type or a coating type. Examples of the immersion type chemical conversion treatment include chromate treatment, ceria sol treatment, zirconium treatment, titanium treatment, vanadium treatment, molybdenum treatment, calcium phosphate treatment, strontium hydroxide treatment, cerium treatment, ruthenium treatment, and various chemical conversion treatments of mixed phases thereof. On the other hand, examples of the coating type chemical conversion treatment include a method of applying a coating agent having a corrosion prevention performance to the barrier layer 13.

Of these anticorrosion treatments, when any of the hydrothermal modification treatment, anodic oxidation treatment, and chemical conversion treatment is used to form at least part of the anticorrosion treatment layer, the degreasing treatment described above is preferably performed in advance. Further, when a degreased metal foil such as an annealed metal foil is used as the barrier layer 13, it is not necessary to perform degreasing treatment again in forming the anticorrosion treatment layers 14a and 14b.

The coating agent used for the coating type chemical conversion treatment preferably contains trivalent chromium. Further, the coating agent may contain at least one polymer selected from the group consisting of a cationic polymer and an anionic polymer described later.

Of the treatments described above, the hydrothermal modification treatment and the anodic oxidation treatment, in particular, dissolve a surface of an aluminum foil with a treating agent to form an aluminum compound (such as boehmite or alumite) which is excellent in corrosion resistance. Therefore, since a co-continuous structure is formed from the barrier layer 13 made of an aluminum foil to the anticorrosion treatment layers 14a and 14b, the above treatments are included in the definition of the chemical conversion treatment. Alternatively, the anti-corrosion treatment layers 14a and 14b can also be formed by only a pure coating method, as described below, which is not included in the definition of the chemical conversion treatment. This coating method may use, for example, a rare-earth oxide sol such as cerium oxide with a mean particle size of 100 nm or less as a material having an anticorrosion effect (inhibitor effect) for aluminum and preferable in terms of environmental aspects. Use of this method makes it possible to impart an anticorrosion effect to a metal foil such as an aluminum foil even when using an ordinary coating method.

Examples of the rare-earth oxide sol include sols using various solvents such as an aqueous solvent, an alcohol-based solvent, a hydrocarbon-based solvent, a ketone-based solvent, an ester-based solvent, an ether-based solvent, and the like. Of these sols, an aqueous sol is preferred as the rare-earth oxide sol.

To stabilize dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Of these dispersion stabilizers, phosphoric acid, in particular, is expected to impart the packaging material 10 with features of (1) stabilizing dispersion of the sol, (2) improving adhesion to the barrier layer 13 making use of an aluminum chelate ability of phosphoric acid, (3) imparting corrosion resistance by trapping aluminum ions (passive state formation), (4) improving cohesive force of the anticorrosion treatment layers 14a and 14b (oxide layer) by readily inducing dehydration condensation of phosphoric acid even at low temperature, and the like.

Since the anticorrosion treatment layers 14a and 14b formed of the rare-earth oxide sol are aggregates of inorganic particles, the cohesive force of these layers may be lowered even after being dry-cured. Therefore, the anticorrosion treatment layers 14a and 14b in this case are preferably compounded with an anionic polymer or a cationic polymer described below in order to supplement the cohesive force.

The anticorrosion treatment layers 14a and 14b are not limited to the layers described above. For example, the anticorrosion treatment layers 14a and 14b may be formed using a treating agent prepared by blending phosphoric acid and a chromium compound with a resin binder (such as aminophenol) as in a coating-type chromate based on known art. When this treating agent is used, the resulting layer will have both the corrosion-preventing function and adhesion. Further, although it is necessary to consider stability of a coating solution, a one-liquid type coating agent prepared in advance by mixing a rare-earth oxide sol with a polycationic polymer or a polyanionic polymer can be used to form the anticorrosion treatment layers 14a and 14b having both the corrosion-preventing function and adhesion.

Regardless of having a multilayer structure or a monolayer structure, the anticorrosion treatment layers 14a and 14b preferably have mass per unit area of 0.005 g/m² to 0.200 g/m², and more preferably 0.010 g/m² to 0.100 g/m². When the mass per unit area is 0.005 g/m² or greater, it is easy to provide the barrier layer 13 with a corrosion prevention function. Even if the mass per unit area exceeds 0.200 g/m², there is little change in the corrosion prevention function. On the other hand, when a rare-earth oxide sol is used, heat-curing during drying may be insufficient if the coating film is thick, which may decrease the cohesive force. The thickness of the anticorrosion treatment layers 14a and 14b can be calculated from their specific gravity.

From the perspective of enhancing adhesion between the sealant layer and the barrier layer, the anticorrosion treatment layers 14a and 14b may contain, for example, cerium oxide, 1 to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and be formed by applying a chemical conversion treatment to the barrier layer 13.

### <Second Adhesive Layer 12b>

The second adhesive layer 12b bonds the barrier layer 13 and the sealant layer 16. A general purpose adhesive for bonding the barrier layer 13 to the sealant layer 16 can be used as the second adhesive layer 12b.

When the anticorrosion treatment layer 14b is provided on the barrier layer 13 and the second anticorrosion treatment layer 14b includes a layer containing at least one polymer selected from the group consisting of the cationic polymers and the anionic polymers described above, the second adhesive layer 12b preferably contains a compound (hereinafter, also referred to as a "reactive compound") having reactivity with the above-mentioned polymer contained in the second anticorrosion treatment layer 14b.

For example, if the second anticorrosion treatment layer 14b contains a cationic polymer, the second adhesive layer 12b preferably contains a compound having reactivity with the cationic polymer. If the second anticorrosion treatment layer 14b contains an anionic polymer, the second adhesive layer 12b preferably contains a compound having reactivity with the anionic polymer. Further, if the second anticorrosion treatment layer 14b contains both a cationic polymer and an anionic polymer, the second adhesive layer 12b preferably contains a compound having reactivity with the cationic polymer and a compound having reactivity with the anionic polymer. However, the second adhesive layer 12b may not necessarily contain the above two types of compounds, but may contain a compound having reactivity with both the cationic polymer and the anionic polymer. The term "having reactivity" as described herein means forming a covalent bond with a cationic polymer or an anionic polymer. The second adhesive layer 12b may further contain an acid-modified polyolefin resin.

The compound having reactivity with the cationic polymer may be at least one compound selected from the group consisting of a polyfunctional isocyanate compound, a glycidyl compound, a compound having a carboxy group, and a compound having an oxazoline group.

Examples of the polyfunctional isocyanate compound include diisocyanates such as tolylene diisocyanate, xylylene diisocyanate or a hydrogenated product thereof, hexamethylene diisocyanate, 4,4'-diphenylmethane diisocyanate or a hydrogenated product thereof, and isophorone diisocyanate; polyisiocyanates such as an adduct obtained by reacting these isocyanates with a polyhydric alcohol such as trimethylolpropane, a biuret obtained by reacting the isocyanates with water, or an isocyanurate as a trimer; and a blocked polyisocyanate obtained by blocking these polyisocyanates with an alcohol, a lactam, an oxime, or the like.

Examples of the glycidyl compound include epoxy compounds obtained by reacting glycols, such as ethylene glycol, diethylene glycol, triethylene glycol, polyethylene glycol, propylene glycol, dipropylene glycol, tripropylene glycol, polypropylene glycol, 1,4-butanediol, 1,6-hexanediol and neopentyl glycol, with epichlorohydrin; epoxy compounds obtained by reacting polyhydric alcohols, such as glycerin, polyglycerin, trimethylolpropane, pentaerythritol and sorbitol, with epichlorohydrin; and epoxy compounds obtained by reacting dicarboxylic acids, such as phthalic acid, terephthalic acid, oxalic acid and adipic acid, with epichlorohydrin.

Examples of the compound having a carboxy group include aliphatic carboxylic acid compounds, aromatic dicarboxylic acid compounds, and salts thereof. Also, poly(meth)acrylic acids or alkali (earth) metal salts of poly(meth)acrylic acids may be used.

Examples of the compound having an oxazoline group include low molecular weight compounds having two or more oxazoline units, or when using a polymerizable monomer such as isopropenyloxazoline, compounds obtained by copolymerizing with acrylic monomers, such as (meth)acrylic acid, (meth)acrylic acid alkyl ester and hydroxyalkyl (meth)acrylate.

Of these compounds, a polyfunctional isocyanate compound is preferred for the compound having reactivity with the cationic polymer, from the perspective of having high reactivity with a cationic polymer and being readily formed into a crosslinked structure.

The compound having reactivity with the anionic polymer may be at least one compound selected from the group consisting of a glycidyl compound and a compound having an oxazoline group. Examples of the glycidyl compound or the compound having an oxazoline group include glycidyl compounds and compounds having an oxazoline group exemplified above as crosslinking agents for converting the cationic polymer into a crosslinked structure. Of these compounds, a glycidyl compound is preferred for the compound having reactivity with the anionic polymer, from the perspective of having high reactivity with an anionic polymer.

When the second adhesive layer 12b contains an acid-modified polyolefin resin, the reactive compound is preferred to also have reactivity with the acidic group in the acid-modified polyolefin resin (i.e., form a covalent bond with the acidic group). This further enhances adhesion to the second anticorrosion treatment layer 14b. In addition, the acid-modified polyolefin resin is permitted to have a crosslinked structure to further improve solvent resistance of the packaging material 10.

The content of the reactive compound is preferably 1 to 10 equivalents relative to the acidic group in the acid-modified polyolefin resin. When the content of the reactive compound is 1 or more equivalents, the reactive compound sufficiently reacts with the acidic group in the acid-modified polyolefin resin. On the other hand, when the content of the reactive compound is 10 equivalents or less, sufficient saturation is reached as a crosslinking reaction with the acid-modified polyolefin resin, and deterioration of various performances due to the presence of unreacted substances can be suppressed. Therefore, the content of the reactive compound may be preferably 5 to 20 parts by mass (solid content ratio) relative to 100 parts by mass of the acid-modified polyolefin resin, for example.

The acid-modified polyolefin resin is obtained by introducing an acidic group into a polyolefin resin. Examples of the acidic group include a carboxy group, a sulfonic acid group, an acid anhydride group, and the like. A maleic anhydride group and a (meth)acrylic acid group are particularly preferred. The acid-modified polyolefin resin may be, for example, the same resin as a modified polyolefin resin used for the sealant layer 16.

The second adhesive layer 12b may contain various additives, such as a flame retardant, a slip agent, an anti-blocking agent, an antioxidant, a photostabilizer, a tackifier, a dehydrating agent and a crystal nucleating agent.

From the perspective of suppressing deterioration in lamination strength associated with a corrosive gas such as hydrogen sulfide or an electrolyte and the perspective of further suppressing deterioration in insulation properties, the second adhesive layer 12b may contain, for example, an acid-modified polyolefin and at least one curing agent selected from the group consisting of a polyfunctional isocyanate compound, a glycidyl compound, a compound having a carboxy group, a compound having an oxazoline group and a carbodiimide compound. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide and N,N'-di-p-tolylcarbodiimide.

Examples of the adhesive used for forming the second adhesive layer 12b include a polyurethane-based adhesive obtained by adding polyester polyol containing hydrogenated dimer fatty acid and diol to polyisocyanate. Examples of the adhesive include a polyurethane resin prepared by reacting a main resin such as a polyester polyol, polyether polyol, acrylic polyol or carbonate polyol with a bifunctional or higher functional isocyanate compound, and an epoxy resin prepared by reacting a main resin having an epoxy group with an amine compound. These are preferred from the viewpoint of heat resistance.

The thickness of the second adhesive layer 12b is not particularly limited, but from the perspective of obtaining a desired adhesive strength, processability and the like, the thickness is preferably 1 µm to 10 µm, and more preferably 2 µm to 7 µm.

### <Sealant Layer 16>

The sealant layer 16 imparts sealing properties to the packaging material 10 due to heat-sealing, and is located on the inside of the solid-state battery and heat sealed when the solid-state battery is assembled.

The sealant layer 16 may be a resin film made of a polyolefin-based resin or a polyester-based resin. These resins (hereinafter, also referred to as "base resins") constituting the sealant layer 16 may be used singly or in combination of two or more.

Examples of the polyolefin-based resin include low density, medium density or high density polyethylenes; ethylene-α olefin copolymers; polypropylenes; block or random copolymers containing propylene as a copolymerization component; polybutene; and propylene-α olefin copolymers. The polyolefin-based resin is preferably polypropylene, and more preferably block polypropylene, from the perspective of heat resistance and flexibility.

Examples of the polyester-based resin include polyethylene terephthalate (PET) resin, polybutylene terephthalate (PBT) resin, polyethylene naphthalate (PEN) resin, polybutylene naphthalate (PBN) resin, and copolymers thereof.

The sealant layer 16 may contain a polyolefin-based elastomer. The polyolefin-based elastomer may or may not have miscibility with the base resin described above, or may contain both a miscible polyolefin-based elastomer having miscibility and an immiscible polyolefin-based elastomer having no miscibility. Having miscibility (miscible system) means that the polyolefin-based elastomer is dispersed with a dispersed phase size of 1 nm or greater and less than 500 nm in the base resin. Having no miscibility (immiscible system) means that the polyolefin-based elastomer is dispersed with a dispersed phase size of 500 nm or greater and less than 20 µm in the base resin.

When the resin is a polypropylene-based resin, the miscible polyolefin-based elastomer may be, for example, propylene-butene-1 random copolymer, and the immiscible polyolefin-based elastomer may be, for example, ethylene-butene-1 random copolymer. The polyolefin-based elastomers can be used singly or in combination of two or more.

Further, the sealant layer 16 may contain additive components such as a slip agent, an anti-blocking agent, an antioxidant, a photostabilizer, a flame retardant, a dehydrating agent, a tackifier and a crystal nucleating agent. The content of these additive components is preferably 5 parts by mass or less when the total mass of the sealant layer 16 is 100 parts by mass.

The thickness of the sealant layer 16 is not specifically limited, but may be preferably in the range of 20 µm to 200 µm, more preferably in the range of 30 µm to 150 µm, and still more preferably in the range of 40 µm to 100 µm, from the perspective of reducing the film thickness and enhancing the heat sealing strength in a high temperature environment.

The sealant layer 16 may be either a single-layer film or a multilayer film, and may be suitably selected according to the required function.

### <Composite Oxide>

At least one of the layers constituting the packaging material 10 of the present embodiment contains a composite oxide containing a divalent metal and a trivalent metal. Hereinafter, the composite oxide is also referred to as a "composite oxide X."

The composite oxide X may contain, as a divalent metal, at least one selected from the group consisting of Zn, Mg, Ca, Ni, Co, Fe, Ba, Mn and Cu. The divalent metal preferably includes at least one selected from the group consisting of Zn, Mg, Fe and Mn, and more preferably includes at least Zn, from the perspective of providing the packaging material 10 with improved hydrogen sulfide absorption properties. The trivalent metal is preferably Al from the perspective of the ease of stable preparation of the composite oxide X.

From the perspective of providing the packaging material 10 with improved moisture barrier properties and hydrogen sulfide absorption properties, the composite oxide X is preferably represented by the following general formula (1). It can be confirmed by XRD (X-ray diffraction) or the like that the composite oxide X has a structure represented by general formula (1):

(M¹_{y}M²_{1-y})₁₋ₓM³ₓO_{1+x/2} (1)

[in formula (1), M¹ represents a divalent metal selected from the group consisting of Zn, Mg, Ca, Ni, Co, Fe, Ba, Mn and Cu, M² represents at least one divalent metal selected from the group consisting of Zn, Mg, Ca, Ni, Co, Fe, Ba, Mn and Cu, and is a metal different from M¹, M³ represents at least one trivalent metal selected from the group consisting of Al, Cr, Ga and Fe, x satisfies 0.2 < x ≤ 0.4, and y satisfies 0.25 ≤ y ≤ 1.]

M¹ is preferably a divalent metal selected from the group consisting of Zn, Mg, Ca, Ni and Cu, and more preferably a divalent metal selected from the group consisting of Zn and Mg, from the perspective of providing the packaging material 10 with improved hydrogen sulfide absorption properties. M² is preferably at least one divalent metal selected from the group consisting of Zn, Mg, Ca, Ni and Cu, and more preferably a divalent metal selected from the group consisting of Zn and Mg, from the perspective of providing the packaging material 10 with improved hydrogen sulfide absorption properties. M³ is preferably at least one trivalent metal selected from the group consisting of Al and Fe, and more preferably Al, from the perspective of the ease of stable preparation of the composite oxide X represented by formula (1).

In formula (1), M¹ is preferably Zn, from the perspective of providing the packaging material 10 with improved hydrogen sulfide absorption properties. That is, the composite oxide X is preferably represented by the following general formula (2):

(Zn_{y}M²_{1-y})₁₋ₓM³ₓO_{1+x/2} (2)

[in formula (2), M² represents at least one divalent metal selected from the group consisting of Mg, Ca, Ni, Co, Fe, Ba, Mn and Cu, M³ represents at least one trivalent metal selected from the group consisting of Al, Cr, Ga and Fe, x satisfies 0.2 < x ≤ 0.4, and y satisfies 0.25 ≤ y ≤ 1.]

Further, when M¹ is Zn in formula (1), y=1 is preferred from the perspective of providing the packaging material 10 with further improved hydrogen sulfide absorption properties. That is, the composite oxide X is preferably represented by the following general formula (3):

Zn₁₋ₓM³ₓO_{1+x/2} (3)

[in formula (3), M³ represents at least one trivalent metal selected from the group consisting of Al, Cr, Ga and Fe, and x satisfies 0.2 < x ≤ 0.4.]

In formulas (1) to (3), x may be 0.2 < x < 0.34.

The average major axis of the composite oxide X may be 30 µm or less, preferably 20 µm or less, more preferably 15 µm or less, still more preferably 10 µm or less, still more preferably 5 µm or less, and still more preferably 3 µm or less, from the perspective of increasing the surface area and further improving the hydrogen sulfide and moisture absorption properties. In particular, when the composite oxide X is contained in the sealant layer 16 and the average major axis of the composite oxide X is 20 µm or less, the sealant layer 16 is likely to form a flat surface, making heat sealing easier. The average major axis of the composite oxide X may be 0.01 µm or greater, preferably 0.05 µm or greater, more preferably 0.1 µm or greater, still more preferably 0.5 µm or greater, and still more preferably 1 µm or greater, from the perspective of improving the dispersibility of the composite oxide X and suppressing deterioration of functions (for example, adhesion strength, sealing strength, etc.) of the layer containing the composite oxide X. In particular, when the average major axis of the composite oxide X is 0.01 µm or greater, the composite oxide X tends to be uniformly dispersed. The average major axis of the composite oxide X may be 0.01 µm to 30 µm, preferably 0.01 µm to 20 µm, more preferably 0.1 µm to 15 µm, and still more preferably 0.5 µm to 5 µm. The major axis of the composite oxide X refers to the length of the line that crosses the composite oxide when observed with an electron microscope. The average major axis of the composite oxide X refers to the average of the major axes of 100 particles of the composite oxide X measured with an electron microscope.

The ratio of the average major axis of the composite oxide X to the thickness of the layer containing the composite oxide X (average major axis of the composite oxide X/thickness of the layer containing the composite oxide X) may be 0.5 or less, preferably 0.3 or less, and more preferably 0.1 or less, from the perspective of suppressing deterioration of functions (for example, adhesion strength, sealing strength, etc.) of the layer containing the composite oxide X. The ratio of the average major axis of the composite oxide X to the thickness of the layer containing the composite oxide X is preferably 0.01 or greater, and more preferably 0.05 or greater, from the perspective of improving the dispersibility of the composite oxide X and further improving the hydrogen sulfide and moisture absorption properties.

The composite oxide X can be obtained by, for example, calcining hydrotalcite containing a divalent metal and a trivalent metal at 300°C to 1,200°C for 1 hour to 10 hours. More specifically, the composite oxide X can be obtained by calcining hydrotalcite represented by the following general formula (4) at 300°C to 1,200°C for 1 hour to 10 hours. Hereinafter, the hydrotalcite represented by general formula (4) is also referred to as "hydrotalcite X."

(M¹_{y}M²_{1-y})₁₋ₓM³ₓ(OH)₂(An)_{x/n}·mH₂O (4)

[in formula (4), M¹ represents a divalent metal selected from the group consisting of Zn, Mg, Ca, Ni, Co, Fe, Ba, Mn and Cu, M² represents at least one divalent metal selected from the group consisting of Zn, Mg, Ca, Ni, Co, Fe, Ba, Mn and Cu, and is a metal different from M¹, M³ represents at least one trivalent metal selected from the group consisting of Al, Cr, Ga and Fe, An represents an n-valent anion, x satisfies 2 < x ≤ 0.4, y satisfies 0.25 ≤ y ≤ 1, and m represents an integer of 1 to 10.]

Examples of the anion An of the hydrotalcite X include OH⁻, Cl⁻, CO₃²⁻ and SO₄²⁻.

When the composite oxide X is represented by formula (2), the composite oxide X can be obtained by calcining hydrotalcite represented by the following general formula (5) at 300°C to 1,200°C for 1 hour to 10 hours.

(Zn_{y}M²_{1-y})₁₋ₓM³ₓ(OH)₂(An)_{x/n}·mH₂O (5)

[in formula (5), M² represents at least one divalent metal selected from the group consisting of Mg, Ca, Ni, Co, Fe, Ba, Mn and Cu, M³ represents at least one trivalent metal selected from the group consisting of Al, Cr, Ga and Fe, An represents an n-valent anion, x satisfies 0.2 < x ≤ 0.4, y satisfies 0.25 ≤ y ≤ 1, and m represents an integer of 1 to 10.]

The hydrotalcite X can be prepared by a known method. The hydrotalcite X can be prepared by, for example, a production method including a step of adding a carbonate aqueous solution to a metal salt aqueous solution to obtain a first aqueous solution, a step of reacting the first aqueous solution to obtain a second aqueous solution containing a reactant, and a step of drying the reactant. More specifically, the hydrotalcite X can be prepared by the methods described in examples below.

The composite oxide X may be used as it is, or may be used after a surface treatment by a known method (using a surface treatment agent such as a metallic soap) so that it can be easily dispersed in a resin or an adhesive.

The composite oxide X is converted into hydrotalcite X when it adsorbs moisture. That is, due to the composite oxide X adsorbing moisture, the layer containing the composite oxide X can contain hydrotalcite X. When the composite oxide X is converted into the hydrotalcite X, the hydrotalcite X needs to be heated to 300°C or higher to release the moisture. In normal use of the solid-state battery, the temperature is only around 100°C. Therefore, the use of the composite oxide X can suppress re-release of moisture.

The conversion of the composite oxide X into the hydrotalcite X accompanying the adsorption of moisture is not a fully reversible reaction, and a part of the composite oxide X maintains the structure represented by formula (1) even after adsorption of moisture. In the layer containing the composite oxide X, the composite oxide X content may be 1 mass% or greater relative to the total amount of the hydrotalcite X.

The composite oxide X has a structure in which a metal element (for example, Zn) can adsorb hydrogen sulfide. Even if the composite oxide X adsorbs hydrogen sulfide and generates moisture by chemical reaction, the composite oxide X adsorbs the generated moisture, and thus prevents hydrogen sulfide from being re-generated due to a reaction between the re-released moisture and the sulfide-based solid electrolyte.

The water content of the hydrotalcite X in the layer containing the composite oxide X may be 60 mass% or less, preferably 50 mass% or less, and more preferably 40 mass% or less, relative to the mass of the hydrotalcite X when fully hydrated.

In the packaging material 10, the composite oxide X may be contained in at least one of the second adhesive layer 12b and the sealant layer 16. In this case, due to the composite oxide X contained in a layer on the sealant layer 16-side relative to the barrier layer 13, even if moisture passes through the barrier layer 13, the moisture can be absorbed, and even if hydrogen sulfide permeates from the sealant layer 16-side of the packaging material 10, the hydrogen sulfide easily comes into contact with the composite oxide X, and the hydrogen sulfide is quickly adsorbed by the composite oxide X. The composite oxide X is preferably contained at least in the sealant layer 16. In this case, the innermost layer of the packaging material 10 is the sealant layer 16, and hydrogen sulfide generated inside the packaging material 10 more easily comes into contact with the composite oxide X, and the hydrogen sulfide can be more quickly adsorbed by the composite oxide X. When the second adhesive layer 12b and/or the sealant layer 16 are each composed of a plurality of layers, the composite oxide X may be contained in only one of the plurality of layers, or may be contained in two or more layers.

Since the composite oxide X can adsorb both moisture and hydrogen sulfide, even when a content of the composite oxide X is small compared with the case where a moisture adsorbing substance and a hydrogen sulfide adsorbing substance are used in combination, excellent moisture barrier properties and hydrogen sulfide absorption properties can be obtained. Further, since excellent moisture barrier properties and hydrogen sulfide absorption properties can be performed even when a content of the composite oxide X is small compared with the case where a moisture adsorbing substance and a hydrogen sulfide adsorbing substance are used in combination, deterioration of layer functions (for example, adhesion strength, sealing strength, etc.) can be easily suppressed.

The content of the composite oxide X in a layer containing the composite oxide X may be 0.5 mass% or greater, preferably 1 mass% or greater, more preferably 1.5 mass% or greater, still more preferably 2 mass% or greater, still more preferably 2.5 mass% or greater, still more preferably 3 mass% or greater, still more preferably 3.5 mass% or greater, still more preferably 4 mass% or greater, still more preferably 4.5 mass% or greater, and still more preferably 5 mass% or greater relative to the total amount of the layer (100 mass%), from the perspective of further improving the moisture barrier properties and the hydrogen sulfide absorption properties of the packaging material 10. In particular, the content of the composite oxide X of 1 mass% or greater is preferred. The content of the composite oxide X in a layer containing the composite oxide X may be 50 mass% or less, preferably 40 mass% or less, more preferably 30 mass% or less, still more preferably 20 mass% or less, still more preferably 10 mass% or less, still more preferably 8 mass% or less, and still more preferably 5 mass% or less relative to the total amount of the layer, from the perspective of suppressing deterioration of functions (for example, strength of the layer itself, adhesion strength, sealing strength, etc.) of the layer containing the composite oxide X. In particular, the content of the composite oxide X of 40 mass% or less is preferred. The content of the composite oxide X in a layer containing the composite oxide X may be 0.5 mass% to 50 mass%, preferably 1 mass% to 40 mass%, more preferably 1 mass% to 30 mass%, still more preferably 1 mass% to 20 mass%, still more preferably 1 mass% to 10 mass%, and still more preferably 1 mass% to 5 mass% relative to the total amount of the layer. When the composite oxide X is contained in a plurality of layers, the content of the composite oxide X may be within the above ranges relative to the total amount of the plurality of layers.

The total content of the composite oxide X and the hydrotalcite X in a layer containing the composite oxide X may be 5 mass% or greater, preferably 1 mass% or greater, more preferably 1.5 mass% or greater, still more preferably 2 mass% or greater, still more preferably 2.5 mass% or greater, still more preferably 3 mass% or greater, still more preferably 3.5 mass% or greater, still more preferably 4 mass% or greater, still more preferably 4.5 mass% or greater, and still more preferably 5 mass% or greater relative to the total amount of the layer, from the perspective of further improving the moisture barrier properties and the hydrogen sulfide absorption properties of the packaging material 10. The total content of the composite oxide X and the hydrotalcite X in a layer containing the composite oxide X may be 50 mass% or less, preferably 40 mass% or less, more preferably 30 mass% or less, still more preferably 20 mass% or less, still more preferably 10 mass% or less, still more preferably 8 mass% or less, and still more preferably 5 mass% or less relative to the total amount of the layer, from the perspective of suppressing deterioration of functions (for example, adhesion strength, sealing strength, etc.) of the layer containing the composite oxide X. The total content of the composite oxide X and the hydrotalcite X in a layer containing the composite oxide X may be 0.5 mass% to 50 mass%, preferably 1 mass% to 40 mass%, more preferably 1 mass% to 30 mass%, still more preferably 1 mass% to 20 mass%, still more preferably 1 mass% to 10 mass%, and still more preferably 1 mass% to 5 mass%.

The layer containing the composite oxide X may contain a dispersant from the perspective of improving the dispersibility of the composite oxide X. Using the composite oxide X in combination with a dispersant can improve dispersibility of the composite oxide X in the layer, which makes it possible to efficiently adsorb hydrogen sulfide and moisture, and suppress deterioration of functions (for example, adhesion strength, sealing strength, etc.) of the layer containing the composite oxide X. Examples of the dispersant include a metallic soap such as zinc stearate. When the composition (resin) containing the composite oxide X is in a liquid state at room temperature in order to improve the dispersibility of the composite oxide X, it is preferred to use a disperser such as a bead mill. When the composition (resin) containing the composite oxide X is in a solid state at room temperature, it is preferred to disperse the composite oxide X using a disperser, such as a kneader, that disperses the composition while melting it. Further, dispersion of the composite oxide X may also be performed by preparing a masterbatch containing a high concentration of composite oxide X in advance, and mixing the masterbatch with a resin containing no composite oxide X to achieve a predetermined concentration so that the composite oxide X is dispersed in the obtained mixture.

Fig. 1 illustrates an example in which the anticorrosion treatment layers 14a and 14b are disposed on respective sides of the barrier layer 13. However, only one of the anticorrosion treatment layers 14a and 14b may be provided.

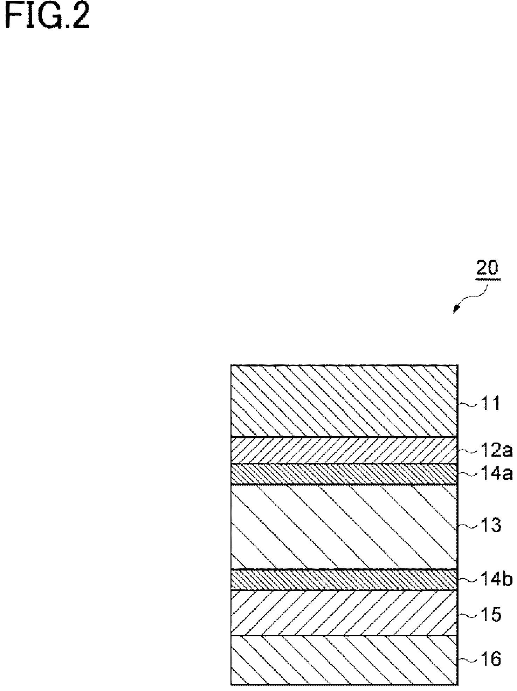

Fig. 1 illustrates an example in which the barrier layer 13 and the sealant layer 16 are laminated with the second adhesive layer 12b as an adhesive layer. However, the barrier layer 13 and the sealant layer 16 may also be laminated with an adhesive resin layer 15 as an adhesive layer, as in a solid-state battery packaging material 20 shown in Fig. 2. Further, in the solid-state battery packaging material 20 shown in Fig. 2, the second adhesive layer 12b may further be provided between the barrier layer 13 and the adhesive resin layer 15.

### <Adhesive Resin Layer 15>

The adhesive resin layer 15 is substantially composed of an adhesive resin composition as the main component and additive components, if necessary. The adhesive resin composition is not particularly limited, but preferably contains a modified polyolefin resin from the perspective of improving adhesion to the barrier layer 13.

The modified polyolefin resin is preferably a polyolefin resin graft-modified with an unsaturated carboxylic acid derivative derived from any of an unsaturated carboxylic acid, acid anhydride thereof and ester thereof.

Examples of the polyolefin resin include low density, medium density and high density polyethylenes, ethylene-α olefin copolymers, homopolypropylenes, blocked polypropylenes, random polypropylenes and propylene-α olefin copolymers.

The modified polyolefin resin is preferably a polyolefin resin modified with maleic anhydride from the viewpoint of obtaining excellent adhesion between the barrier layer 13 and the adhesive resin layer 15. For example, "ADMER" manufactured by Mitsui Chemicals, Inc., "MODIC" manufactured by Mitsubishi Chemical Corporation, "TOYO-TAC" manufactured by Toyobo Co., Ltd., "SANSTACK" manufactured by Sanyo Chemical Industries, Ltd, and the like are suitable for the modified polyolefin resin. Such a modified polyolefin resin excels at reactivity with various metals and polymers having various functional groups, and thus can impart adhesion to the adhesive resin layer 15 making use of the reactivity. Further, the adhesive resin layer 15 may contain, if necessary, various additives such as elastomers, flame retardants, slip agents, anti-blocking agents, antioxidants, photostabilizers, dehydrating agents, crystal nucleating agents and tackifiers of various miscible and immiscible systems.

The thickness of the adhesive resin layer 15 is not particularly limited, but is preferably 1 µm to 30 µm. The thickness of the adhesive resin layer 15 of 1 µm or greater can provide sufficient adhesion. The thickness of the adhesive resin layer 15 of 30 µm or less can reduce the total thickness of the packaging material 10, suppressing a decrease in volume energy density of the battery produced using the packaging material 10. When the adhesive resin layer 15 is bonded to the barrier layer 13 via the second anticorrosion treatment layer 14b by dry lamination, the thickness of the adhesive resin layer 15 is preferably 1 µm to 10 µm. When the adhesive resin layer 15 is bonded to the barrier layer 13 via the second anticorrosion treatment layer 14b by extrusion, the thickness of the adhesive resin layer 15 is preferably 5 µm to 30 µm. The thickness of the adhesive resin layer 15 may be preferably equal to or less than that of the sealant layer 16 from the perspective of stress relaxation and moisture permeation.

The thickness of the sealant layer 16 is not particularly limited, but preferably 10 µm to 150 µm. The thickness of the sealant layer 16 of 10 µm or greater can provide sufficient sealing strength. The thickness of the sealant layer 16 of 150 µm or less can reduce the total thickness of the packaging material 10, suppressing a decrease in volume energy density of the battery produced using the packaging material 10. The thickness of the sealant layer 16 is more preferably 10 µm to 120 µm, and particularly preferably 20 µm to 100 µm.

Further, the total thickness of the adhesive resin layer 15 and the sealant layer 16 in the solid-state battery packaging material 20 is preferably in the range of 5 µm to 180 µm, more preferably 10 µm to 120 µm, and still more preferably 20 µm to 100 µm, from the perspective of reducing the film thickness and enhancing the heat sealing strength in a high temperature environment.

In the packaging material 20, the composite oxide X is contained in at least one of the layers constituting the packaging material 20. The composite oxide X may be contained in the adhesive resin layer 15. In the packaging material 20, the composite oxide X may be contained in at least one layer selected from the group consisting of the adhesive resin layer 15 and the sealant layer 16.

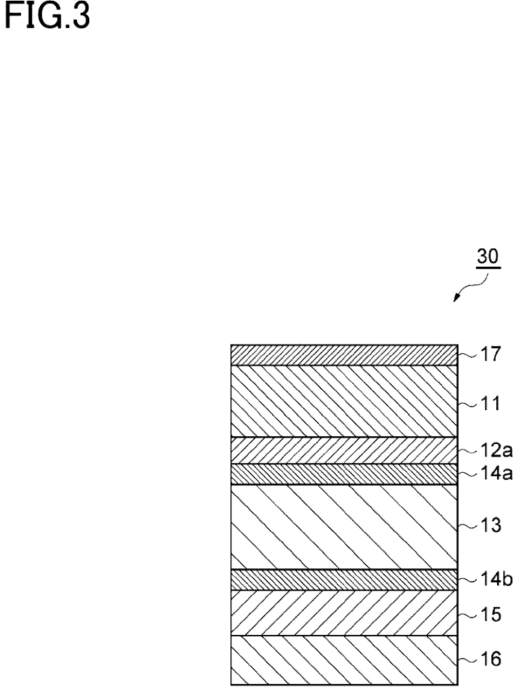

Further, as in a solid-state battery packaging material 30 shown in Fig. 3, the packaging material of the present disclosure may further include a protective layer 17 on a surface of the substrate layer 11 on a side opposite to that facing the barrier layer 13. Further, in Fig. 3, the adhesive resin layer 15 may be the second adhesive layer 12b.

### <Protective Layer 17>

The protective layer 17 is a layer that protects the substrate layer 11. Materials for forming the protective layer 17 can be the same as those for the first adhesive layer 12a. The protective layer 17 can be formed on the substrate layer 11 by coating or the like.

In the packaging material 30, the composite oxide X is contained in at least one of the layers constituting the packaging material 30. The composite oxide X may be contained in the protective layer 17.

### [Method of Producing Packaging Material]

Next, an example of a method of producing the packaging material 10 shown in Fig. 1 will be described. It should be noted that the method of producing the packaging material 10 should not be limited to the methods described below.

The method of producing the packaging material 10 of the present embodiment includes a step of laminating the anticorrosion treatment layers 14a and 14b on respective sides of the barrier layer 13, a step of bonding the substrate layer 11 to the barrier layer 13 using the first adhesive layer 12a, a step of preparing a laminate by further laminating the sealant layer 16 via the second adhesive layer 12b, and, if necessary, a step of aging the resulting laminate.

### (Step of Laminating Anticorrosion Treatment Layers 14a and 14b on Barrier Layer 13)

In this step, the anticorrosion treatment layers 14a and 14b are formed on the barrier layer 13. As described above, the method may include applying degreasing treatment, hydrothermal modification treatment, anodic oxidation treatment or chemical conversion treatment to the barrier layer 13, and applying a coating agent having a corrosion prevention performance to the barrier layer 13.

If the anticorrosion treatment layers 14a and 14b are multilayers, the anticorrosion treatment layers 14a and 14b can be formed by, for example, applying a coating liquid (coating agent) constituting a lower layer-side (barrier layer 13-side) anticorrosion treatment layer to the barrier layer 13, baking it to form a first layer, applying a coating liquid (coating agent) constituting an upper layer-side anticorrosion treatment layer to the first layer, baking it to form a second layer, and repeating these steps.

The degreasing treatment can be performed by spraying or immersion. The hydrothermal conversion treatment and anodic oxidation treatment can be performed by immersion. The chemical conversion treatment can be selected from among immersion, spraying, coating, and the like depending on the type of chemical conversion treatment.

The coating agent having corrosion prevention performance can be applied by various methods such as gravure coating, reverse coating, roll coating and bar coating.

As described above, the various treatments may be applied to either side or both sides of the metal foil, but in the case of a single-side treatment, the treatment is preferably applied to the surface on which the sealant layer 16 is to be laminated. If needed, the above treatment mentioned may also be applied to the surface of the substrate layer 11.

Further, the coating amount of the coating agent for forming each of the first layer and second layer may be 0.005 g/m² to 0.200 g/m², and preferably 0.010 g/m² to 0.100 g/m².

If dry curing is necessary, drying can be performed within a base material temperature range of 60°C to 300°C depending on the drying conditions of the anticorrosion treatment layers 14a and 14b used.

### (Step of Bonding Substrate Layer 11 to Barrier Layer 13)

In this step, the barrier layer 13 provided with the anticorrosion treatment layers 14a and 14b on respective sides is bonded to the substrate layer 11 via the first adhesive layer 12a. These layers are bonded to each other using the material constituting the first adhesive layer 12a described above by a bonding method such as dry lamination, non-solvent lamination, wet lamination, or the like. The dry coating weight of the first adhesive layer 12a may be in the range of 1 g/m² to 10 g/m², and preferably 2 g/m² to 7 g/m².

### (Step of Laminating Second Adhesive Layer 12b and Sealant Layer 16)

In this step, the sealant layer 16 is bonded to the second anticorrosion treatment layer 14b-side of the barrier layer 13 via the second adhesive layer 12b. The bonding method may be wet processing, dry lamination, or the like.

When bonding is performed by wet processing, the second adhesive layer 12b can be formed by applying a solution or dispersion of the adhesive constituting the second adhesive layer 12b to the second anticorrosion treatment layer 14b, evaporating the solvent at a predetermined temperature to form a film, and performing baking, if necessary. Then, the sealant layer 16 is laminated to thereby produce the packaging material 10. The solution or dispersion of the adhesive constituting the second adhesive layer 12b can be applied by various coating method exemplified above. The preferred dry coating weight of the second adhesive layer 12b is the same as that of the first adhesive layer 12a.

In this case, the sealant layer 16 can be produced, for example, using a sealant layer-forming resin composition, containing a constituent component of the sealant layer 16 described above by using a melt extrusion molding machine with a T-die. The processing rate of the melt extrusion molding machine may be set to 80 m/min or more from the viewpoint of productivity.

In formation of the sealant layer 16 containing the composite oxide X, a masterbatch may be prepared in advance by mixing a resin such as polyethylene or polypropylene with the composite oxide X, and the masterbatch may be mixed with the above base resin during extrusion lamination, or the like. In this case, for example, a resin having similar properties, such as MFR, to the resin contained in the masterbatch is used as the base resin. Further, the above-mentioned dispersant may be added during preparation of this masterbatch. Using the composite oxide X as the masterbatch can improve dispersibility of the composite oxide X in the layer, which makes it possible to efficiently adsorb hydrogen sulfide and moisture, and suppress deterioration of functions (for example, adhesion strength, sealing strength, etc.) of the layer containing the composite oxide X. Further, the concentration of the composite oxide X in the masterbatch may be, for example, 5 mass% to 50 mass%. Setting the concentration of the composite oxide X in the masterbatch to 5 mass% or greater enables uniform dispersion of the composite oxide X in the sealant layer 16 by the masterbatch. Further, setting the concentration of the composite oxide X in the masterbatch to 50 mass% or less enables sufficient dispersion in kneading during extrusion, preventing occurrence of defects such as film breakage.

### (Step of Aging)

In this step, the laminate is aged (cured). Aging of the laminate can expedite adhesion between the barrier layer 13 / the second anticorrosion treatment layer 14b / the second adhesive layer 12b / the sealant layer 16. Aging may be performed in the range of room temperature to 100°C. Aging time may be, for example, 1 day to 10 days.

Thus, the packaging material 10 of the present embodiment as shown in Fig. 1 can be produced.

Next, an example of a method of producing the packaging material 20 shown in Fig. 2 will be described. It should be noted that the method of producing the packaging material 20 should not be limited to the methods described below.

The method of producing the packaging material 20 of the present embodiment includes a step of laminating the anticorrosion treatment layers 14a and 14b on respective sides of the barrier layer 13, a step of bonding the substrate layer 11 to the barrier layer 13 using the first adhesive layer 12a, a step of preparing a laminate by further laminating the adhesive resin layer 15 and the sealant layer 16, and, if necessary, a step of heating the resulting laminate. The steps up to the step of bonding the substrate layer 11 to the barrier layer 13 can be performed in the same manner as in the method of producing the packaging material 10.

### (Step of Laminating Adhesive Resin Layer 15 and Sealant Layer 16)

In this step, the adhesive resin layer 15 and the sealant layer 16 are formed on the second anticorrosion treatment layer 14b formed in the previous step. The method includes sandwich-laminating the adhesive resin layer 15 together with the sealant layer 16 using an extrusion laminator. Further, tandem lamination or co-extrusion by which the adhesive resin layer 15 and the sealant layer 16 are extruded can also be used. The components of the adhesive resin layer 15 and the sealant layer 16 may be formulated, for example, to meet the above-mentioned configurations of the adhesive resin layer 15 and the sealant layer 16. The sealant layer 16 is formed by using the above sealant layer-forming resin composition. In formation of the sealant layer 16 containing the composite oxide X, the sealant layer 16 can be formed in the same manner as with the sealant layer 16 of the packaging material 10. In formation of the adhesive resin layer 15 containing the composite oxide X, the adhesive resin layer 15 can be formed in the same manner as with the sealant layer 10 of the packaging material 10 except that the base resin used for the sealant layer 16 is changed to the adhesive resin composition used for the adhesive resin layer 15.

According to this step, there can be obtained a laminate, as shown in Fig. 2, where the substrate layer 11 / the first adhesive layer 12a / the first anticorrosion treatment layer 14a / the barrier layer 13 / the second anticorrosion treatment layer 14b / the adhesive resin layer 15 / the sealant layer 16 are laminated in this order.

When laminating the adhesive resin layer 15, materials that are dry-blended so as to have the composition of the material formulation mentioned above may be directly laminated using an extrusion laminator. Alternatively, when laminating the adhesive resin layer 15, granules obtained in advance by melt-blending materials using a melt kneading device, such as a single-screw extruder, twin-screw extruder or Brabender mixer, may be laminated using an extrusion laminator.

When laminating the sealant layer 16, materials that are dry-blended so as to have the composition of the material formulation mentioned above, as a sealant layer-forming resin composition, may be directly laminated using an extrusion laminator. Alternatively, when laminating the adhesive resin layer 15 and the sealant layer 16, granules obtained in advance by melt-blending materials using a melt kneading device, such as a single-screw extruder, twin-screw extruder or Brabender mixer, may be used to laminate the adhesive resin layer 15 and the sealant layer 16 by tandem lamination or co-extrusion using an extrusion laminator. Moreover, when laminating the sealant layer 16, a sealant monolayer film, as a cast film, may be formed in advance using a sealant layer-forming resin composition, and the film may be laminated by sandwich-lamination together with an adhesive resin. The formation rate (processing rate) of the adhesive resin layer 15 and the sealant layer 16 may be set to 80 m/min or more from the viewpoint of productivity.

### (Step of Heating)

In this step, the laminate is heat-treated. Heat-treatment of the laminate can improve adhesion between the barrier layer 13 /the second anticorrosion treatment layer 14b / the adhesive resin layer 15 / the sealant layer 16. The heat-treatment is preferably performed at a temperature at least higher than the melting point of the adhesive resin layer 15.

Thus, the packaging material 20 of the present embodiment as shown in Fig. 2 can be produced.

Although the preferred embodiments of the solid-state battery packaging material of the present disclosure have been specifically described above, the present disclosure is not limited to the specific embodiments and can be modified or changed in various ways within the spirit of the present disclosure recited in the claims.

### [Solid-State Battery]

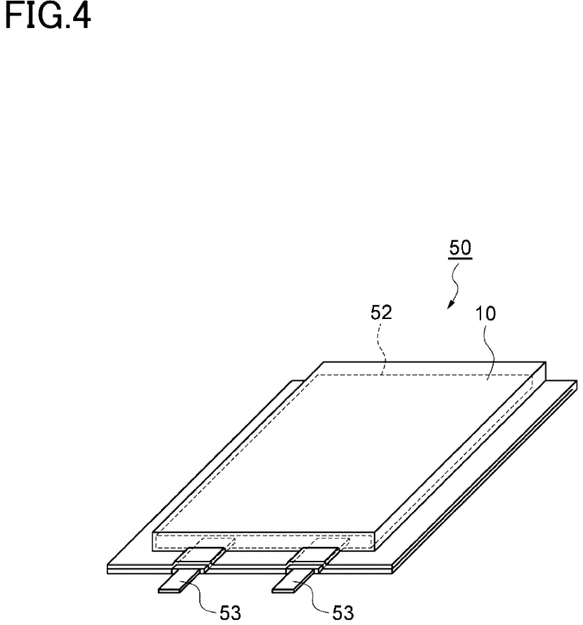

Fig. 4 is a perspective view of an embodiment of the solid-state battery produced using the aforementioned packaging material. As shown in Fig. 4, a solid-state battery 50 includes a battery element 52, two metal terminals (current extraction terminals) 53 extending from the battery element 52 for extracting current externally, and the packaging material 10 that sandwiches and holds the metal terminals 53 and hermetically seals the battery element 52. The packaging material 10 is the packaging material 10 according to the present embodiment described above, and used as a container for accommodating the battery element 52. In the packaging material 10, the substrate layer 11 is the outermost layer and the sealant layer 16 is the innermost layer. That is, the packaging material 10 has a configuration in which a single laminate film is folded in half and heat-sealed at the peripheral portion, or two laminate films are overlapped with each other and heat-sealed at the peripheral portion, with the substrate layer 11 being on the outside of the solid-state battery 50 and the sealant layer 16 being on the inside of the solid-state battery 50, such that the battery element 52 is contained inside the packaging material 10. The metal terminals 53 are sandwiched and held, and hermetically sealed by the packaging material 10 that forms the container with the sealant layer 16 on the inside. The metal terminals 53 may be sandwiched and held by the packaging material 10 via a tab sealant. In the solid-state battery 50, the packaging material 20 or the packaging material 30 may be used instead of the packaging material 10.

The battery element 52 may be formed by interposing a sulfide-based solid electrolyte between a positive electrode and a negative electrode. The metal terminals 53 are a part of a current collector extending out from the packaging material 10, and made of a metal foil such as a copper foil or an aluminum foil. In the solid-state battery 50 of the present embodiment, the packaging material 10 includes a layer containing the composite oxide X, and the composite oxide X can adsorb moisture and hydrogen sulfide. Accordingly, the packaging material 10 has excellent moisture barrier properties and hydrogen sulfide absorption properties. Therefore, since the solid-state battery 50 inhibits moisture from passing through the packaging material 10 and reaching the solid electrolyte in the solid-state battery 50, it is possible to prevent hydrogen sulfide from being generated in the solid-state battery 50 due to reaction between moisture and hydrogen sulfide-based solid electrolyte. Further, even if hydrogen sulfide is generated in the solid-state battery 50, the packaging material 10 having excellent hydrogen sulfide absorption properties can absorb the hydrogen sulfide and detoxify the hydrogen sulfide. In addition, after adsorbing moisture, the composite oxide X is less likely to release moisture even if the solid-state battery 50 is placed in a high-temperature environment of around 100°C. Therefore, even if the solid-state battery 50 having the packaging material 10 is placed in a high-temperature environment of around 100°C after the composite oxide X adsorbs moisture, it is possible to prevent hydrogen sulfide from being re-generated due to reaction between moisture and hydrogen sulfide-based solid electrolyte in the solid-state battery 50. In addition, even if moisture is generated by chemical reaction when the packaging material 10 adsorbs hydrogen sulfide, the composite oxide X adsorbs the generated moisture, and thus prevents hydrogen sulfide from being re-generated due to a reaction between moisture and the hydrogen sulfide-based solid electrolyte in the solid-state battery 50.

Since the packaging material described above has excellent moisture barrier properties, the application is not limited to packaging materials for solid-state batteries, and may also be used as packaging materials for power storage devices which contain liquid electrolyte.

### Examples

The present disclosure will be described below in more detail by way of examples. However, the present disclosure should not be limited to the following examples.

### [Preparation of Composite Oxide]

### <Composite Oxide A>

0.02 mol of magnesium nitrate hexahydrate (Mg(NO₃)₂·6H₂O) and 0.01 mol of aluminum nitrate nonahydrate (Al(NO₃)₃·9H₂O) were dissolved in 100 mL of ultra-pure water to obtain a metal salt aqueous solution A1. 0.047 mol of sodium carbonate (Na₂CO₃) was dissolved in 300 mL of ultra-pure water to obtain a carbonate salt aqueous solution. Then, the carbonate salt aqueous solution was kept at 70°C, and the metal salt aqueous solution Al was added thereto while stirring to obtain a metal salt aqueous solution A2. Then, 0.05 mol of NaOH was dissolved in 100 mL of pure water, and the mixture was added to the metal salt aqueous solution A2 until the pH reaches 10, which in turn was stirred for 24 hours to obtain a metal salt aqueous solution A3. The metal salt aqueous solution A3 was centrifuged, and the resulting product was washed until the pH of the washing solution reaches about 7.5. Then, the obtained product was dried at 80°C for 12 hours to obtain hydrotalcite A having Mg:Al of 2:1 (molar ratio). The obtained hydrotalcite A was calcined at 500°C for 2 hours to obtain a composite oxide A that satisfies formula (1). In the obtained composite oxide A, in formula (1), M¹ was Mg, M³ was Al, x was 0.33, and y was 1. The obtained composite oxide A was classified to obtain a powder of the composite oxide A with the average major axis of 1 µm. The average major axis of the composite oxide A was calculated by measuring the major axes of 100 particles of the composite oxide A with an electron microscope, and averaging the measured values.

### <Composite Oxide B>

0.01 mol of magnesium nitrate hexahydrate (Mg(NO₃)₂·6H₂O), 0.01mol of zinc sulfate hexahydrate (Zn(NO₃)₂·6H₂O) and 0.01 mol of aluminum nitrate nonahydrate (Al(NO₃)₃·9H₂O) were dissolved in 100 mL of ultra-pure water to obtain a metal salt aqueous solution B1. 0.047 mol of sodium carbonate (Na₂CO₃) was dissolved in 300 mL of ultra-pure water to obtain a carbonate salt aqueous solution. Then, the carbonate salt aqueous solution was kept at 70°C, and the metal salt aqueous solution B1 was added thereto while stirring to obtain a metal salt aqueous solution B2. Then, 0.05 mol of NaOH was dissolved in 100 mL of pure water, and the mixture was added to the metal salt aqueous solution B2 until the pH reached 10, which in turn was stirred for 24 hours to obtain a metal salt aqueous solution B3. The metal salt aqueous solution B3 was centrifuged, and the resulting product was washed until the pH of the washing solution reaches about 7.5. Then, the obtained product was dried at 80°C for 12 hours to obtain hydrotalcite B having Zn:Mg:Al of 1:1:1 (molar ratio). The obtained hydrotalcite B was calcined at 500°C for 2 hours to obtain a composite oxide B that satisfies formula (2). In the obtained composite oxide B, in formula (2), M² was Mg, M³ was Al, x was 0.33, and y was 0.5. The obtained composite oxide B was classified to obtain a powder of the composite oxide B with the average major axis of 1 µm. The average major axis of the composite oxide B was calculated by measuring the major axes of 100 particles of the composite oxide B with an electron microscope, and averaging the measured values.

### <Composite Oxide C>

0.02 mol of zinc sulfate hexahydrate (Zn(NO₃)₂·6H₂O) and 0.01 mol of aluminum nitrate nonahydrate (Al(NO₃)₃·9H₂O) were dissolved in 100 mL of ultra-pure water to obtain a metal salt aqueous solution C1. 0.047 mol of sodium carbonate (Na₂CO₃) was dissolved in 300 mL of ultra-pure water to obtain a carbonate salt aqueous solution. Then, the carbonate salt aqueous solution was kept at 70°C, and the metal salt aqueous solution C1 was added thereto while stirring to obtain a metal salt aqueous solution C2. Then, 0.05 mol of NaOH was dissolved in 100 mL of pure water, and the mixture was added to the metal salt aqueous solution C2 until the pH reaches 10. The resulting mixture was stirred for 24 hours to obtain a metal salt aqueous solution C3. The metal salt aqueous solution C3 was centrifuged, and the resulting product was washed until the pH of the washing solution reaches about 7.5. Then, the obtained product was dried at 80°C for 12 hours to obtain hydrotalcite C having Zn:Al of 2:1 (molar ratio). The obtained hydrotalcite C was calcined at 500°C for 2 hours to obtain a composite oxide C that satisfies formula (1). In the obtained composite oxide C, in formula (1), M¹ was Zn, M³ was Al, x was 0.33, and y was 1. The obtained composite oxide C was classified to obtain powders of the composite oxide C with the average major axes of 1 µm, 10 µm and 30 µm. The average major axis of the composite oxide C was calculated by measuring the major axes of 100 particles of the composite oxide C with an electron microscope, and averaging the measured values.

### [Materials Used]

Materials used in examples and comparative examples are described below.

### <Substrate Layer (15 µm Thickness)>

Nylon (Ny) film (manufactured by Toyobo Co., Ltd.) was used.

### <First Adhesive Layer>

A polyurethane adhesive (manufactured by Toyo Ink Co., Ltd.) was used, containing a polyester polyol-based main resin to which a tolylene diisocyanate adduct curing agent was added.

### <First Anticorrosion Treatment Layer (Substrate Layer-side) and Second Anticorrosion Treatment Layer (Sealant Layer-side)>

(CL-1): A Sodium polyphosphate stabilized cerium oxide sol was used after being adjusted to a solid concentration of 10 mass% by using distilled water as a solvent. The sodium polyphosphate stabilized cerium oxide sol was obtained by formulating 10 parts by mass of Na salt of phosphoric acid per 100 parts by mass of cerium oxide.

(CL-2): A composition having 90 mass% of polyallylamine (manufactured by Nitto Boseki Co., Ltd) and 10 mass% of polyglycerol polyglycidyl ether (manufactured by Nagase ChemteX Corp.) was used after being adjusted to a solid concentration of 5 mass% using distilled water as a solvent.

### <Barrier Layer (40 µm Thickness)>

An annealed and degreased soft aluminum foil (8079 Material manufactured by Toyo Aluminum K.K.) was used.

### <Preparation of Adhesive Resin Layer-Forming Composition>

Using a twin-screw extruder, an adhesive resin layer-forming composition containing an adhesive resin (random polypropylene (PP)-based acid-modified polypropylene resin composition, manufactured by Mitsui Chemicals, Inc.) and a composite oxide shown in Table 1 as a hydrogen sulfide adsorbing substance, and an adhesive resin layer-forming composition composed of the above adhesive resin were prepared. The compounded amount of the hydrogen sulfide adsorbing substance in the adhesive resin layer-forming composition was as shown in Table 1. The compounded amount refers to the ratio (mass%) relative to the total amount (100 mass%) of each layer.

### <Preparation of Sealant Layer-Forming Composition>

Using a twin-screw extruder, a sealant layer-forming composition containing polypropylene-polyethylene random copolymer (manufactured by Prime Polymer Co., Ltd., product name: F744NP) and a composite oxide shown in Table 1 as a hydrogen sulfide adsorbing substance, and a sealant layer-forming composition composed of the above polypropylene-polyethylene random copolymer were prepared. The compounded amount of the hydrogen sulfide adsorbing substance in the sealant layer-forming composition was as shown in Table 1. The compounded amount refers to the ratio (mass%) relative to the total amount (100 mass%) of each layer.

### [Production of Packaging Material]

### (Examples 1 to 11)

The first and second anticorrosion treatment layers were respectively provided on the barrier layer through the following procedure. That is, (CL-1) was applied to both surfaces of the barrier layer by micro gravure coating at a dry coating weight of 70 mg/m², followed by baking at 200°C in a drying unit. Next, (CL-2) was applied to the obtained layers by micro gravure coating at a dry coating weight of 20 mg/m², thereby forming composite layers composed of a layer made of (CL-1) and a layer made of (CL-2) as first and second anticorrosion treatment layers. The composite layers developed corrosion prevention performance by compounding two materials (CL-1) and (CL-2).

Next, the first anticorrosion treatment layer-side of the barrier layer provided with the first and second anticorrosion treatment layers was bonded to the substrate layer by dry lamination using a polyurethane-based adhesive (first adhesive layer). For lamination of the barrier layer to the substrate layer, the polyurethane-based adhesive was applied to a surface of the first anticorrosion treatment layer on a side opposite to that facing the barrier layer at a cured thickness of 5 µm, followed by drying at 80°C for 1 minute, and the surface was then laminated to the substrate layer, followed by aging at 60°C for 72 hours. Thus, a first laminate having the barrier layer and the substrate layer was obtained.

Then, the first laminate thus obtained was loaded on an unwinding unit of an extrusion laminator and coextruded onto the second anticorrosion treatment layer under processing conditions of 270°C and 100 m/min, thereby laminating an adhesive resin layer (20 µm thickness), a first sealant layer (30 µm thickness) and a second sealant layer (30 µm thickness) in this order to obtain a second laminate. The adhesive resin layer and the sealant layer were prepared from the adhesive resin layer-forming composition and the sealant layer-forming composition prepared as above, respectively, through water cooling and pelletizing steps, and then used for the above extrusion lamination.

The second laminate thus obtained was heat-treated so that the maximum temperature reached of the second laminate would be 190°C to prepare a packaging material (laminate of substrate layer / first adhesive layer / first anticorrosion treatment layer / barrier layer / second anticorrosion treatment layer / adhesive resin layer / sealant layer (first and second sealant layers)).

### (Comparative Example 1)

A packaging material (laminate of substrate layer / first adhesive layer / first anticorrosion treatment layer / barrier layer / second anticorrosion treatment layer / adhesive resin layer / sealant layer (first and second sealant layers)) was prepared in the same manner as in Example 1 except that no hydrogen sulfide adsorbing substance was added to the first and second sealant layers.

### (Comparative Example 2)

A packaging material (laminate of substrate layer / first adhesive layer / first anticorrosion treatment layer / barrier layer / second anticorrosion treatment layer / adhesive resin layer / sealant layer (first and second sealant layers)) was prepared in the same manner as in Example 1 except that zinc oxide was used as the hydrogen sulfide adsorbing substance.

### [Measurement of Heat Sealing Strength]

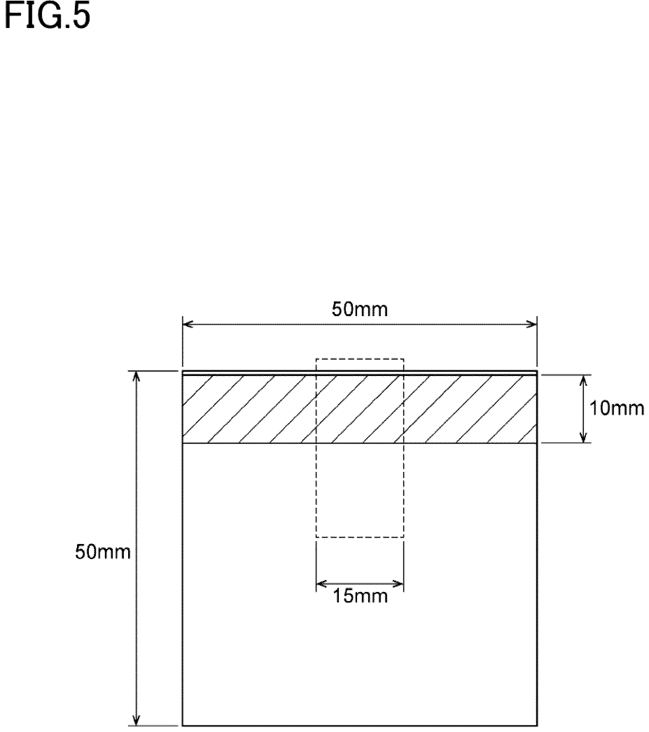

A sample obtained by cutting the prepared packaging material to a size of 50 mm (TD) × 100 mm (MD) was folded in two so as to sandwich an aluminum foil which has been subjected to chemical conversion treatment and cut to a size of 50 mm × 50 mm, and the edge portion on the opposite side to the folded section was heat-sealed at 180°C / 0.6 MPa / 10 seconds with a width of 10 mm. Then, a 15 mm-width portion was cut from a longitudinal center part of the heat-sealed portion (see Fig. 5) to prepare a sample for measuring heat sealing strength. The sample for measuring heat sealing strength was subjected to a T-peel test using a tensile tester (manufactured by Shimadzu Corporation) in a room temperature environment (25°C) under the condition of a tension rate of 50 mm/min. From the obtained results, the heat sealing strength (burst strength) was assessed according to the following evaluation criteria. Table 1 shows the measurement results.
A: Heat sealing strength is 20 N/15 mm or greater
B: Heat sealing strength is 15 N/15 mm or greater and less than 20 N/15 mm
C: Heat sealing strength is less than 15 N/15 mm

### [Evaluation of Hydrogen Sulfide (H₂S) Absorption Properties]

The packaging material was cut to a size of 50 mm × 50 mm to prepare a sample for evaluating hydrogen sulfide absorption properties. The sample was placed in a 2 L Tedlar bag, which was then sealed. 2 L of hydrogen sulfide gas with a concentration of 20 volume ppm was introduced into the Tedlar bag, and left to stand at room temperature (25°C) for 144 hours, and after standing for 144 hours the hydrogen sulfide concentration (unit: volume ppm) in the Tedlar bag was measured. From the obtained results, the hydrogen sulfide (H₂S) absorption properties were assessed according to the following evaluation criteria. Table 1 shows the measurement results.
A: Hydrogen sulfide concentration is 5 volume ppm or less
B: Hydrogen sulfide concentration is more than 5 volume ppm and 10 volume ppm or less
C: Hydrogen sulfide concentration is more than 10 volume ppm

### [Evaluation of Moisture Barrier Properties]

Two pieces were cut from the prepared packaging material, and heat-sealed on three sides with the sealant layer inside so that the internal size was 100 mm × 45 mm. 3 g of an electrolyte solution containing no lithium salt was introduced from the open side, and then the open side was heat-sealed. Then, the periphery was trimmed so that the heat seal width was 5 mm, which was in turn left to stand in an environment of 40°C and 90%RH (relative humidity) for 1 day. Then, the moisture content in the contained electrolyte solution was measured with a Karl Fischer moisture analyzer, and the amount of transmitted moisture was calculated from the measured moisture content. From the obtained results, the moisture barrier properties were assessed according to the following evaluation criteria. Table 1 shows the measurement results.
A: Moisture transmission rate is less than 10⁻² g/m²·day
B: Moisture transmission rate is less than 10⁻¹ g/m²·day and 10⁻² g/m²·day or greater
C: Moisture transmission rate is 10⁻¹ g/m²·day or greater

**[Table 1]**

| | Type of hydrogen sulfide absorbing substance | | | Compounded amount | | | Compounded amount in entire sealant layer | Average major axis of composite oxide | Sealing strength (room temperature) | | H₂S absorption properties | | Moisture barrier properties | |
|---|---|---|---|---|---|---|---|---|---|---|---|---|---|---|
| | Adhesive layer | First sealant layer | Second sealant layer | Adhesive layer | First sealant layer | Second sealant layer | | | Evaluation | Measure ment (N) | Evaluation | Measur ement (ppm) | Evaluation | Measure ment (g) |
| Ex 1 | - | C | C | - | 5% | 5% | 5.0% | 1 µm | A | 30 | A | 2 | A | 0.005 |
| Ex 2 | C | - | - | 5% | - | - | 0.0% | 1 µm | A | 30 | A | 5 | A | 0.008 |
| Ex 3 | C | C | C | 5% | 5% | 5% | 5.0% | 1 µm | A | 30 | A | 2 | A | 0.004 |
| Ex 4 | - | - | C | - | - | 5% | 2.5% | 1 µm | A | 30 | A | 3 | A | 0.005 |
| Ex 5 | - | C | - | - | 5% | - | 2.5% | 1 µm | A | 30 | A | 4 | A | 0.007 |
| Ex 6 | - | A | A | - | 5% | 5% | 5.0% | 1 µm | A | 30 | A | 5 | A | 0.005 |
| Ex 7 | - | B | B | - | 5% | 5% | 5.0% | 1 µm | A | 30 | A | 3 | A | 0.005 |
| Ex 8 | - | C | C | - | 1% | 1% | 1.0% | 1 µm | A | 32 | A | 5 | A | 0.009 |
| Ex 9 | - | C | C | - | 20% | 20% | 20.0% | 1 µm | A | 24 | A | 0 | A | 0.003 |
| Ex 10 | - | C | C | - | 40% | 40% | 40.0% | 1 µm | B | 18 | A | 0 | A | 0.002 |
| Ex 11 | - | C | C | - | 50% | 50% | 50.0% | 1 µm | C | 13 | A | 0 | A | 0.002 |
| Ex 12 | - | C | C | - | 5% | 5% | 5.0% | 10 µm | B | 19 | A | 3 | A | 0.007 |
| Ex 13 | - | C | C | - | 5% | 5% | 5.0% | 30 µm | C | 14 | A | 5 | A | 0.008 |
| Ex 14 | - | C | C | - | 0.5% | 0.5% | 0.5% | 1 µm | A | 31 | B | 7 | B | 0.016 |
| Comp. Ex. 1 | - | - | - | - | - | - | 0.0% | - | A | 31 | C | 18 | C | 0.120 |
| Comp. Ex. 2 | - | zinc oxide | zinc oxide | - | 5% | 5% | 5.0% | 35 µm | A | 30 | A | 0 | C | 0.130 |

### [Industrial Applicability]

According to the solid-state battery packaging material of the present disclosure, a solid-state battery having excellent moisture barrier properties and hydrogen sulfide absorption properties can be provided.

### [Reference Signs List]

- 10, 20, 30: Solid-state battery packaging material
- 11: Substrate layer
- 12a: First adhesive layer
- 12b: Second adhesive layer
- 13: Barrier layer
- 14a: First anticorrosion treatment layer
- 14b: Second anticorrosion treatment layer
- 15: Adhesive resin layer
- 16: Sealant layer
- 17: Protective layer
- 50: Solid-state battery
- 52: Battery element
- 53: Metal terminal

## Claims

1. A solid-state battery packaging material at least comprising:
a substrate layer;
a barrier layer; and
a sealant layer laminated in this order, wherein
at least one of the layers constituting the packaging material contains a composite oxide containing a divalent metal and a trivalent metal.

2. The solid-state battery packaging material according to claim 1, wherein
the composite oxide is represented by the following general formula (1):
(M¹_{y}M²_{1-y})₁₋ₓM³ₓO_{1+x/2}... (1)
[in formula (1), M¹ represents a divalent metal selected from the group consisting of Zn, Mg, Ca, Ni, Co, Fe, Ba, Mn and Cu, M² represents at least one divalent metal selected from the group consisting of Zn, Mg, Ca, Ni, Co, Fe, Ba, Mn and Cu, and is a metal different from M¹, M³ represents at least one trivalent metal selected from the group consisting of Al, Cr, Ga and Fe, x satisfies 0.2 < x ≤ 0.4, and y satisfies 0.25 ≤ y ≤ 1.]

3. The solid-state battery packaging material according to claim 2, wherein M¹ is Zn in the general formula (1).

4. The solid-state battery packaging material according to claim 3, wherein y=1 in the general formula (1).

5. The solid-state battery packaging material according to any one of claims 1 to 4, wherein the trivalent metal is Al.

6. The solid-state battery packaging material according to any one of claims 1 to 5, wherein the composite oxide has an average major axis of 0.01 µm or greater.

7. The solid-state battery packaging material according to any one of claims 1 to 6, wherein
the sealant layer contains a composite oxide, and
the composite oxide has an average major axis of 20 µm or less.

8. The solid-state battery packaging material according to any one of claims 1 to 7, wherein
a content of the composite oxide in the layer containing the composite oxide is 1 mass% to 40 mass% relative to a total amount of the layer.

9. The solid-state battery packaging material according to any one of claims 1 to 8, further comprising
an adhesive layer between the barrier layer and the sealant layer, wherein
the adhesive layer and/or the sealant layer are each formed of a plurality of layers, and at least one of the plurality of layers contains the composite oxide.

10. The solid-state battery packaging material according to any one of claims 1 to 9, further comprising
an anticorrosion treatment layer provided on one or both surfaces of the barrier layer.

11. A solid-state battery comprising:
a battery element; and
the solid-state battery packaging material according to any one of claims 1 to 10 that accommodates the battery element.
